# EUROPÄISCHE PATENTANMELDUNG

(11) **EP 3 420 825 A1**
(43) Veröffentlichungstag der Anmeldung: **02.01.2019**
(21) Anmeldenummer: 18179653.3
(22) Anmeldetag: 25.06.2018
(51) Int. Cl.: A23L 2/385, A23L 2/54, A23L 2/44, A23L 2/60, A23L 2/68, A23F 5/24, A23F 5/10, A23F 5/14, A23F 5/26, A23F 3/16

(54) **HALTBARER COLD BREW**

(30) Priorität: 26.06.2017 EP 17177895
(71) Anmelder: Authentic Nutrients GmbH, 22529 Hamburg (DE)
(72) Erfinder: Schulz, Norbert, 20251 Hamburg (DE)
(74) Vertreter: Raffay & Fleck

(57) **Zusammenfassung**

Die Erfindung betrifft die Haltbarmachung von cold brews, cold brews und deren Herstellung. Kalte Aufgüsse zur Zubereitung von Getränken, insbesondere von Kaffee und/oder Tee, sogenannte cold brews, und derartige Getränke sind im Stand der Technik zahlreich bekannt. Allerdings gestaltet sich die Haltbarkeit der Aufgüsse und/oder Getränke, insbesondere auf Basis von Kaffee problematisch, wenn die Getränke nicht gekühlt werden, insbesondere nicht bei Temperaturen von unter 15°C, insbesondere von unter 10°C, gekühlt gelagert werden.

Aufgabe ist es, ein Verfahren zur Haltbarmachung, eine Verwendung von Zucker, Säure und/oder Karbonisierung zur Haltbarmachung, ein Verfahren zur Herstellung sowie ein Getränkekonzentrat und ein Getränk auf Basis von kalten Aufgüssen von Tee und/oder Kaffee anzugeben, die auch ungekühlt für mindestens 3 Monate, insbesondere mindestens 6 Monate, besonders bevorzugt mindestens 12 Monate, haltbar sind. Dies kann überraschend durch Zugabe von Zucker und/oder pH-Wert-Senkung durch Zugabe von Säure, insbesondere Karbonisierung, in den beanspruchten Wertebereichen, Mengen und/oder Konzentrationen erreicht werden.

## Beschreibung

Die Erfindung betrifft die Haltbarmachung von cold brews, cold brews und deren Herstellung. Aus der CN105941778 ist ein warmer bis heißer Aufguss aus Kaffeepulver und Flüssigkaffeextrakt durch Einrühren in 30 bis 70°C warmes Wasser bekannt, der anschließend gefiltert und gekühlt und karbonisiert wird und anschließend bei 90°C sterilisiert und auf unter 10°C gekühlt wird.

Aus der US 5,470,565 A ist ein Teeaufguss mit Wasser einer Temperatur zwischen 90 und 93°C bekannt. Darauf aufbauend ist Aus der US 2002/0034576 A1 bekannt, den Teeaufguss mit Wasser einer Temperatur von 90 bis 93 °C der US 5,470,565 A zu karbonisieren.

Im Gegensatz zu heißen Aufgüssen, wie aus der CN105941778 oder US 5,470,565 A bekannt, sind kalte Aufgüsse in Bezug auf die ungekühlte Haltbarkeit sehr problematisch.

Kalte Aufgüsse zur Zubereitung von Getränken, insbesondere von Kaffee und/oder Tee, sogenannte cold brews, und derartige Getränke sind im Stand der Technik zahlreich bekannt. Allerdings gestaltet sich die Haltbarkeit der Aufgüsse und/oder Getränke, insbesondere auf Basis von Kaffee problematisch, wenn die Getränke nicht gekühlt werden, insbesondere nicht bei Temperaturen von unter 15°C, insbesondere von unter 10°C, gekühlt gelagert werden.

Aufgabe ist es, ein Getränkekonzentrat und ein Getränk auf Basis von kalten Aufgüssen von Tee und/oder Kaffee anzugeben, die auch ungekühlt für mindestens 3 Monate, insbesondere mindestens 6 Monate, besonders bevorzugt mindestens 12 Monate, haltbar sind. Dies kann überraschend durch Zugabe von Zucker und/oder pH-Wert-Senkung durch Zugabe von Säure, insbesondere Karbonisierung, in den beanspruchten Wertebereichen, Mengen und/oder Konzentrationen erreicht werden. Dies ist insbesondere für kalte Aufgüsse von Kaffee überraschend, die bisher ungekühlt nicht länger als 2 Monate haltbar sind. Gerade die Kombination von Zugabe von Zucker und pH-Wert-Senkung, insbesondere durch Karbonisierung, erreicht einen synergistischen Effekt, der die einfache, kostengünstige und Inhaltsstoffe schonende Haltbarmachung für eine Haltbarkeit von mindestens 12 Monaten gewährleisten kann. Insbesondere durch die pH-Wert-Senkung zumindest auch, insbesondere nur durch Karbonisierung, kann geschmacklich weitgehend neutral eine Haltbarmachung erreicht werden. Durch die Erfindung wird es erstmalig möglich, Getränke auf Basis kalter Aufgüsse, insbesondere von Kaffee, ungekühlt im Lebensmitteleinzelhandel anzubieten.

Versuche haben belegt, dass die unten als Beispiel angegebene Rezepturen eine Haltbarkeit von mehr als 6 Monaten nur erreichen kann, wenn sowohl ein erfindungsgemäßer Zuckergehalt als auch eine erfindungsgemäße pH-Wert Einstellung durchgeführt wird.

Bei Zugabe von Stillem Wasser anstelle von Mineralwasser oder bei Weglassen der Zugabe von Zucker konnte bei den unten genannten Rezepturen eine Haltbarkeit von 6 Monaten bei Lagerung bei 20°C nicht erreicht werden.

Darüber hinaus bewirkt der Einsatz von Zucker die Konservierung des ursprünglichen Kaffeearomas, das ohne dessen Einsatz sehr schnell verloren ginge.

Gelöst wird die Aufgabe durch ein Getränk nach Anspruch 1 oder ein Getränkekonzentrat nach Anspruch 7. Die abhängigen Ansprüche geben vorteilhafte Weiterbildungen an.

Gelöst wird die Aufgabe auch durch ein Verfahren nach Anspruch nach Anspruch 10 oder 14. Bekannte Rezepturen können verwendet und durch die Erfindung ergänzt bzw. haltbar gemacht werden.

Unter Volumen% wird insbesondere eine Angabe kaltem und ungekühltem Zustand, insbesondere bei Standardbedingungen, bei 20°C, 23°C und/oder 25°C verstanden. Insbesondere handelt es sich dabei bevorzugt um das Schüttvolumen, insbesondere mit einer Dichte zwischen 0,9 und 1,1g/cm^3. Alternativ kann es sich dabei um das Volumen ohne Lufteinschluss, insbesondere mit einer Dichte zwischen 1,4 und 1,8 g/cm^3.

Insbesondere bevorzugt wird eine Zuckermenge von mindestens 4 Volumen% oder Gew% oder mindestens 4 Volumen% oder 6,4 Gew% , insbesondere mindestens 5 Volumen% oder Gew% oder mindestens 5 Volumen% oder 7 Gew%, insbesondere maximal 16 Volumen% oder Gew% oder maximal 16 Volumen% oder 25,6 Gew% im Getränk.

Gelöst wird die Aufgabe insbesondere durch ein Kalt aufgegossenes Getränk, insbesondere in einer verschlossenen Flasche, insbesondere ungekühlt, hergestellt durch kaltes Aufgießen gerösteter und gemahlener Kaffeebohnen mit einer kalten Flüssigkeit und Ziehen lassen und anschließender Klärung, Filtrierung und/oder Zentrifugierung aufweisen eine Zuckerkonzentration, insbesondere von mindestens 4 Volumen% oder Gew%, insbesondere mindestens 5 Volumen% oder Gew%,, insbesondere maximal 16 Volumen% oder Gew%,, und aufweisend einen pH-Wert von maximal 5,5, insbesondere unter 5, insbesondere über 2.

Gelöst wird die Aufgabe insbesondere durch ein kalt aufgegossenes Getränkekonzentrat hergestellt durch kaltes Aufgießen geröstete und gemahlene Kaffeebohnen mit einer kalten Flüssigkeit und Ziehen lassen und anschließender Klärung, Filtrierung und/oder Zentrifugierung, aufweisen eine Zuckerkonzentration, von mehr als 60 Volumen% oder Gew%,, insbesondere mindestens 65 Volumen% oder Gew%,, insbesondere maximal 80 Volumen% oder Gew%,, und/oder aufweisend einen pH Wert von maximal 5,5, insbesondere von unter 5 und/oder insbesondere über 2

Gelöst wird die Aufgabe insbesondere durch ein Verfahren zur Herstellung eines kalt aufgegossenen Getränks, insbesondere in einer verschlossenen Flasche, insbesondere ungekühlt, durch kaltes Aufgießen gerösteter und gemahlener Kaffeebohnen mit einer kalten Flüssigkeit und Ziehen lassen und anschließendem Klären, Filtern und/oder Zentrifugieren und durch Zugabe von Zucker, sodass das Getränk eine Zuckerkonzentration, insbesondere von mindestens 4 Volumen% oder Gew%, insbesondere mindestens 5 Volumen% oder Gew%, insbesondere maximal 16 Volumen% oder Gew, aufweist und
Karbonisierung durch Zugabe von mindestens 2,5g, insbesondere mindestens 3g, insbesondere 2,5 bis 4g pro Liter Getränk und/oder Einstellen des pH-Werts auf maximal 5,5, insbesondere unter 5 und/oder insbesondere über 2, insbesondere durch Karbonisierung durch Zugabe von mindestens 2,5g, insbesondere mindestens 3g, insbesondere 2,5 bis 4g pro Liter Getränk.

Gelöst wird die Aufgabe insbesondere durch ein Verfahren zur Herstellung eines kalt aufgegossenem Getränkekonzentrat durch kaltes Aufgießen geröstete und gemahlene Kaffeebohnen mit einer kalten Flüssigkeit und Ziehen lassen und anschließendes Klären, Filtrieren und/oder Zentrifugieren, und Zusatz von Zucker, sodass das Getränkekonzentrat eine Zuckerkonzentration, von mehr als 60 Volumen% oder Gew%, insbesondere mindestens 65 Volumen% oder Gew%, insbesondere maximal 80 Volumen% oder Gew%, und
Zugabe von mindestens 2,5g, insbesondere mindestens 3g, insbesondere 2,5 bis 4g pro Liter Getränkekonzentrat oder Einstellen des pH-Werts auf maximal 5,5, insbesondere unter 5 und/oder insbesondere über 2, insbesondere durch Karbonisierung durch Zugabe von mindestens 2,5g, insbesondere mindestens 3g, insbesondere 2,5 bis 4g pro Liter Getränkekonzentrat.

Vorteilhafterweise wird oder wurde oder ist das Getränk und/oder -konzentrat ohne Antischäummittel, z.B. Velcorin, und/oder ohne Kaltentkeimung abgefüllt. Vorteilhafterweise enthält es kein Antischäummittel und/oder kein Kaltentkeimungsmittel und/oder wird eine solches nicht zugegeben.

Vorteilhafterweise ist und/oder wird das Getränk und/oder -konzentrat nicht über 45°C erhitzt und/oder nicht durch Erhitzung konserviert und/oder kalt abgefüllt.

Vorteilhafterweise beinhaltet das Getränk und/oder -konzentrat mindestens einen Fruchtsaftbestandteil

Vorteilhafterweise ist und/oder wird das Getränk und/oder -konzentrat mit Fruchtsaftbestandteil und/oder der mindestens eine Fruchtsaftbestandteil, insbesondere vor dem Abfüllen, geklärt, gefiltert und/oder zentrifugiert.

Unter einem Getränkekonzentrat ist eine Flüssigkeit zu verstehen, die zumindest im mit Wasser verdünnten Zustand verzehrbar ist.

Insbesondere beinhaltet das Getränk und/oder -konzentrat kein Konservierungs- und/oder Stabilisierungsmittel, abgesehen von Zucker und Kohlensäure.

Sofern im Rahmen dieser Erfindung Kaffeebohnen verwendet werden, handelt es sich insbesondere um milde Kaffeebohnen. Sofern im Rahmen dieser Erfindung aus Kaffeebohnen hergestellte Getränke verwendet oder beansprucht werden, handelt es sich insbesondere um solche, die unter Verwendung milder Kaffeebohnen gewonnen wurden.

Unter kalt wird insbesondere eine Temperatur < = 45°C, insbesondere < = 42°C, insbesondere > 30°C, verstanden. Kaltes Wasser weist somit insbesondere eine Temperatur < = 45°C, insbesondere < = 42°C, insbesondere >30°C, auf. Ein kaltes Aufgießen geschieht somit durchgehend bei Temperaturen < = 45°C, insbesondere < = 42°C. Unter kalt wird dabei insbesondere aber ein ungekühlter Zustand, insbesondere eine Temperatur größer 10°C, insbesondere größer 15°C, verstanden.

Unter ungekühlt wird insbesondere ein Zustand mit eine Temperatur von über 7°C, insbesondere über 10°C, insbesondere über 15°C und/oder eine Lagerung nicht ein einer Kühlvorrichtung, wie beispielsweise Kühlschrank oder Kühltheke verstanden.

Karbonisieren kann generell durch Einleiten von CO₂ und/oder durch Verdünnen des Filtrats, Getränks und/oder Getränkekonzentrats mit karbonisierter Flüssigkeit durchgeführt werden.

Mit besonderem Vorteil ist das kalt aufgegossene Getränkekonzentrat ein konservierungsmittelfreies Getränkekonzentrat. Mit besonderem Vorteil ist das kalt aufgegossene Getränk ein konservierungsmittelfreies Getränk. Unter konservierungsmittelfrei wird insbesondere das nicht Zusetzten von und/oder die Freiheit von Zusatzstoffen E200 bis E299 und E1105 gemäß der VERORDNUNG (EU) Nr. 1129/2011 verstanden.

Im Rahmen dieser Erfindung wird als Zucker insbesondere Saccharose, insbesondere Rohrzucker, Glucose, Maltose, Galaktose, Laktose und/oder Fructose verwendet oder in dem Getränk oder Getränkekonzentrat beinhaltet.

Das Getränk ist insbesondere ein in einer verschlossenes Flasche befindliches Getränk.

Das Getränk und das Getränkekonzentrat beinhaltet insbesondere ausschließlich geklärten, gefilterten und/oder zentrifugierten kalten Kaffeeaufguss und/oder kalten Teeaufguss und die anspruchsgemäßen Stoffe sowie Aromen und/oder Fruchtsaft.

Das Getränkekonzentrat kann durch Wasserentzug konzentriert werden. Hierfür wird ein besonders schonendes kaltes Konzentrationsverfahren mittels Umkehrosmose angewendet. Das wasserentzogene Konzentrat oder eine darauf basierende Zubereitung kann transportiert und/oder mit Wasser verdünnt werden.

Durch Pasteurisierung, vor der Abfüllung, kann Cold Brew haltbar gemacht werden. Alternativ kann die Haltbarkeit durch Schockfrostung verlängert werden. Insbesondere die Pasteurisierung ist jedoch aufwendig und den Inhaltstoffen abträglich.

Mit besonderem Vorteil ist das kalt aufgegossene Getränkekonzentrat ein ein nicht-pasteurisiertes und/oder nicht schockgefrostetes Getränkekonzentrat. Mit besonderem Vorteil ist das kalt aufgegossene Getränk ein nicht-pasteurisiertes und/oder nicht schockgefrostetes Getränk.

Mit besonderem Vorteil ist und/oder wird das Getränk oder -konzentrat und/oder zumindest einer seiner Bestandteile, insbesondere vor dem Abfüllen geklärt, gefiltert und/oder zentrifugiert und/oder werden Schwebstoffe zumindest teilweise entfernt und/oder ist das Getränk oder -konzentrat schwebstoffteilchenreduziert und/oder enthält keine Schwebstoffe oder weniger als durch seine Zutaten ohne Klärung, Filtrierung und/oder Zentrifugierung beinhaltet. Generell wird bei jeder beschriebenen eine Filtrierung mit einem Filter mit einer nominalen Porengröße und/oder Cutt-off Porengröße von 0,08 bis 0,2 *µ*m, insbesondere von 0,1*µ*m bis 0,13*µ*m, bevorzugt bzw. ein mit einem solchen Filter filtrierte Flüssigkeit, Getränk und/oder Getränkekonzentrat.

Unter Schwebstoffen werden insbesondere Partikel mit einer Größe von mehr als 0,2*µ*m, insbesondere von mehr als 0,1*µ*m verstanden.

Beispielsweise eigenen sich folgende Rezepturen zur Abfüllung in einen Flasche und ungekühlter Lagerung für 123 Monate:

### Beispiel 1:

kaltes aufgegossener gerösteter und gemahlene Kaffeebohnen, gefiltert und aufkonzentriert 0,025 kg
Mineralwasser 0,879 kg
Zucker 0,07 kg
Limettenkonzentrat 0,018kg
Ingwer, püriert 0,08 kg

### Beispiel 2:

kaltes aufgegossener gerösteter und gemahlene Kaffeebohnen, gefiltert und aufkonzentriert 0,025 kg
Mineralwasser 0,879 kg
Zucker 0,07 kg
Cranberrysaft, geklärt (filtriert) 0,021kg
Apfelsaftkonzentrat, geklärt (filtriert) 0,009 kg
Blaubeerkonzentrat, geklärt (filtriert) 0,008 kg
Johannisbeerkonzentrat, geklärt (filtriert) 0,007 kg

### Beispiel 3:

kaltes aufgegossener gerösteter und gemahlene Kaffeebohnen, gefiltert und aufkonzentriert 0,025 kg
Mineralwasser 0,879 kg
Zucker 0,07 kg
Blaubeerkonzentrat, geklärt (filtriert) 0,023 kg
Birnbeerkonzentrat, geklärt (filtriert) 0,014 kg
100g Trockenmasse ergeben 83 a 1,2g
Für 0,025 kg kaltes aufgegossener gerösteter und gemahlene Kaffeebohnen, gefiltert und aufkonzentriert wurden je 2,5g Kaffeetrockenmasse aufgegossen.

Dieses Konzentrat wurde mit dem Mineralwasser und den weiteren Zutaten vermischt und in Glas- oder PETflaschen abgefüllt. Nach 12 Monaten ungekühlter Lagerung bei 20°C war es noch haltbar und/oder verzehrbar.

Das Mineralwasser wies dabei jeweils 3,5g Kohlensäure pro Liter auf.

## Patentansprüche

1. Kalt aufgegossenes Getränk, insbesondere in einer verschlossenen Flasche, insbesondere ungekühlt, hergestellt durch kaltes Aufgießen gerösteter und gemahlener Kaffeebohnen mit einer kalten Flüssigkeit und Ziehen lassen und anschließender Klärung, Filtrierung und/oder Zentrifugierung aufweisen eine Zuckerkonzentration, insbesondere von mindestens 4 Volumen% oder Gew%, insbesondere mindestens 5 Volumen% oder Gew%,, insbesondere maximal 16 Volumen% oder Gew%,, und aufweisend einen pH-Wert von maximal 5,5, insbesondere unter 5 und/oder insbesondere über 2.

2. Getränk nach Anspruch 1, wobei das Getränk ohne Antischäummittel, z.B. Velcorin, und/oder ohne Kaltentkeimung abgefüllt wurde und/oder kein Antischäummittel und/oder kein Kaltentkeimungsmittel enthält.

3. Getränk nach einem der vorstehenden Ansprüche, wobei das Getränk nicht über 45°C erhitzt und/oder nicht durch Erhitzung konserviert ist und/oder wobei das Getränk kalt abgefüllt ist.

4. Getränk nach einem der vorstehenden Ansprüche, wobei das Getränk mindestens einen Fruchtsaftbestandteil beinhaltet und/oder das Getränk mit Fruchtsaftbestandteil und/oder der mindestens eine Fruchtsaftbestandteil, insbesondere vor dem Abfüllen, geklärt, gefiltert und/oder zentrifugiert ist.

5. Getränk nach einem der vorstehenden Ansprüche, wobei mindestens 2,5g, insbesondere mindestens 3g, insbesondere 2,5 bis 4g, Kohlensäure pro Liter Getränk beinhaltet sind und/oder der ph-Wert einen Wert von maximal 5,5 insbesondere unter 5 und/oder insbesondere über 2 aufweist.

6. Getränk nach einem der vorstehenden Ansprüche, wobei das kalt aufgegossen Getränk soweit frei von Partikeln ist, wie diese durch einen Filter mit nominaler Größe und/oder Cut-off Größe von maximal 0,2*µ*m, insbesondere maximal 0,13*µ*m, zurück gehalten werden.

7. Kalt aufgegossenes Getränkekonzentrat hergestellt durch kaltes Aufgießen geröstete und gemahlene Kaffeebohnen mit einer kalten Flüssigkeit und Ziehen lassen und anschließender Klärung, Filtrierung und/oder Zentrifugierung, aufweisen eine Zuckerkonzentration, von mehr als 60 Volumen% oder Gew%,, insbesondere mindestens 65 Volumen% oder Gew%,, insbesondere maximal 80 Volumen% oder Gew%,, und/oder aufweisend einen pH Wert von maximal 5,5, insbesondere von unter 5 und/oder insbesondere über 2.

8. Getränkekonzentrat nach Anspruch 7, wobei mindestens 3g, insbesondere 4 bis 6g, Kohlensäure pro Liter Getränkekonzentrat beinhaltet sind und/oder der ph-Wert einen Wert von maximal 5,5 insbesondere unter 5 und/oder insbesondere über 2aufweist.

9. Getränkekonzentrat nach einem der vorstehenden Ansprüche, wobei das kalt aufgegossen Getränkekonzentrat, soweit frei von Partikeln ist, wie diese durch einen Filter mit nominaler Größe und/oder Cut-off Größe von maximal 0,2*µ*m, insbesondere maximal 0,13*µ*m, zurück gehalten werden.

10. Verfahren zur Herstellung eines kalt aufgegossenen Getränks, insbesondere in einer verschlossenen Flasche, insbesondere ungekühlt, durch kaltes Aufgießen gerösteter und gemahlener Kaffeebohnen mit einer kalten Flüssigkeit und Ziehen lassen und anschließendem Klären, Filtern und/oder Zentrifugieren und durch Zugabe von Zucker, sodass das Getränk eine Zuckerkonzentration, insbesondere von mindestens 4 Volumen% oder Gew%, insbesondere mindestens 5 Volumen% oder Gew%, insbesondere maximal 16 Volumen% oder Gew, aufweist und
Karbonisierung durch Zugabe von mindestens 2,5g, insbesondere mindestens 3g, insbesondere 2,5 bis 4g pro Liter Getränk und/oder Einstellen des pH-Werts auf maximal 5,5, insbesondere unter 5 und/oder insbesondere über 2, insbesondere durch Karbonisierung durch Zugabe von mindestens 2,5g, insbesondere mindestens 3g, insbesondere 2,5 bis 4g pro Liter Getränk.

11. Verfahren nach Anspruch 10, wobei das Getränk ohne Antischäummittel, z.B. Velcorin, und/oder ohne Kaltentkeimung abgefüllt wird und/oder kein Antischäummittel und/oder kein Kaltentkeimungsmittel zugegeben wird.

12. Verfahren nach einem der vorstehenden Ansprüche 10 und 11, wobei das Getränk nicht über 45°C erhitzt und/oder nicht durch Erhitzung konserviert wird, und/oder kalt abgefüllt wird und/oder wobei das Getränk ungekühlt gelagert, transportiert und/oder zum Kauf angeboten wird.

13. Verfahren nach einem der vorstehenden Ansprüche 10 bis 12, wobei mindestens ein Fruchtsaft und/oder -konzentrat zugegeben wird, und das Getränk mit Fruchtsaft und/oder -konzentrat und/oder der mindestens eine Fruchtsaft und/oder -konzentrat, insbesondere vor dem Abfüllen, geklärt, gefiltert und/oder Zentrifugiert wird.

14. Verfahren zur Herstellung eines kalt aufgegossenem Getränkekonzentrat durch kaltes Aufgießen geröstete und gemahlene Kaffeebohnen mit einer kalten Flüssigkeit und Ziehen lassen und anschließendes Klären, Filtrieren und/oder Zentrifugieren, und Zusatz von Zucker, sodass das Getränkekonzentrat eine Zuckerkonzentration, von mehr als 60 Volumen% oder Gew%, insbesondere mindestens 65 Volumen% oder Gew%, insbesondere maximal 80 Volumen% oder Gew%, und
Zugabe von mindestens 2,5g, insbesondere mindestens 3g, insbesondere 2,5 bis 4g pro Liter Getränkekonzentrat oder Einstellen des pH-Werts auf maximal 5,5, insbesondere unter 5 und/oder insbesondere über 2, insbesondere durch Karbonisierung durch Zugabe von mindestens 2,5g, insbesondere mindestens 3g, insbesondere 2,5 bis 4g pro Liter Getränkekonzentrat.

15. Verfahren nach dem vorstehenden Anspruch 14, wobei mindestens ein Fruchtsaft und/oder -konzentrat zugegeben wird, und das Getränk mit Fruchtsaft und/oder -konzentrat und/oder der mindestens eine Fruchtsaft und/oder -konzentrat, insbesondere vor dem Abfüllen, geklärt, gefiltert und/oder Zentrifugiert wird.
